# EUROPEAN PATENT SPECIFICATION

(11) **EP 0 561 060 B1**
(45) Date of publication and mention of the grant of the patent: **29.04.1998**
(21) Application number: 92200426.2
(22) Date of filing: 14.02.1992
(51) Int. Cl.: C08L 3/08, C08L 23/02

(54) **Composition containing a polymer of unsaturated hydrocarbons, a starch derivative and an ethylene butylacrylate copolymer**
Zusammensetzung enthaltend ein Polymer eines ungesättigten Kohlenwasserstoffs, ein Stärke-Derivat und ein Ethylen-Butylacrylat-Copolymer
Composition contenant un polymère d'hydrocarbures insaturées, un dérivatif d'amidon et un copolymère éthylène/acrylate de butyle

(43) Date of publication of application: 22.09.1993
(73) Proprietor: CARGILL B.V., NL-4612 PS Bergen op Zoom (NL); NESTE OY, SF-02150 Espoo 15 (FI)
(72) Inventor: Bussink, Jan, Prof. Drs., NL-4625 CT Bergen op Zoom (NL); German, Anton Leendert, Prof. Dr. Ir., NL-5655 JD Eindhoven (NL); Meijer, Henricus Eduard Hubertus, Prof. Dr. Ir., NL-5502 JA Veldhoven (NL); Delrue, Rita Maria, Ing., NL-4621 HR Bergen op Zoom (NL); Zijderveld, Antonius Hendrik, Drs., NL-8171 XT Vaassen (NL); Virtanen, Kari, SF-02100 Espoo (FI)
(74) Representative: Ellowicz, Leo, Drs.

(56) References cited:
- EP-A- 0 402 826
- EP-A- 0 417 828
- EP-A- 0 459 560

## Description

This invention relates to a composition, containing a polymer of unsaturated hydrocarbon, a C₁₋₄ alkyl- or hydroxyalkylether of starch for improving the biodegradability and an acrylate polymer as compatibilizing agent and a polyhydric aliphatic alcohol having 2-10 carbonatoms and 2-6 hydroxyl groups as a dispersant/plasticizer/lubricant for the starch ether.

A similar composition is described in Dutch patent application 9001826, which is not a prior publication, and the corresponding European application 91201981.7; the compatibilizing agent is a vinyl or acrylate polymer.

Dutch patent application 8902321 discloses a composition which contains a polymer of unsaturated hydrocarbon, a C₁₋₄ alkyl or hydroxyalkyl starch ether and a vinyl or acryl polymer; preferably a higher carboxylic acid, such a stearic acid, oleic acid or di-oleic acid, is added as a plasticizer or lubricant.

The compositions according to Dutch patent application 9001826, which contain an alcohol, constitute an improvement over the compositions according to Dutch patent application 8902321 which contain a carboxylic acid; the alcohol has a better dispersing action than the carboxylic acid and provides better properties in terms of strength, elasticity and film forming.

This invention provides a further improvement over the compositions according to Dutch patent application 9001826 in terms of the elongation at break, while the tensile strength remains practically the same.

According to the invention an ethylene butylacrylate copolymer containing 12-25% of butylacrylate and having grafted thereon 0.1-20% by weight of unsaturated acid, based on the total sum of ethylene, butylacrylate and unsaturated acid.

The use of this compatibilizing agent yields the above mentioned improvement over the compositions according to Dutch patent application 9001826.

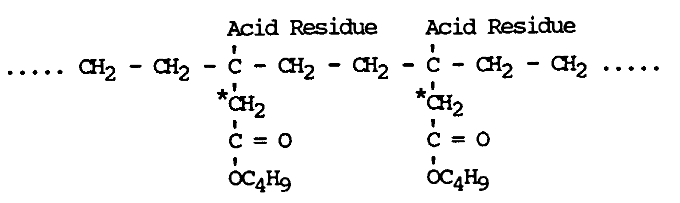

In the structure of the above figure 1, representing the compatibilizing agent used according to this invention, the grafting of the acid only takes place at the C-atoms marked* because only these sites are active enough for said grafting.

When grafting the ethylene-butylacrylate copolymer, the starting materials are, in addition to the copolymer, 0.1-20% of unsaturated acid or anhydride 0.01-0.5% of radical former, which are mixed at a temperature at which the mixture is in molten state. The radical former decomposes and produces the radicals which cause the grafting.

Examples of the acids and anhydrides are acrylic acid, methacrylic acid, maleic acid, fumaric acid and maleic anhydride.

Examples of the radical formers are organic peroxides, peresters, percarbonates or radical former of another type.

Specific examples of common radical formers are dicumyl peroxide, cumyl tert.butyl peroxide and di-tert.butyl peroxide. The temperature can be varied between 100 and 300°C. For more detailed information reference is made to EP 0 225 067 and US 4.877.685.

Preferably the amount of unsaturated acid is 0.3-1.5% and more preferably 0.6-1.2%, and the amount of butylacrylate is preferably 14-21%.

A product containing the above preferred amounts and fumaric acid as the unsaturated acid, is sold by Neste under the name NCPE 0414; a product containing the same preferred amounts and maleic acid as said unsaturated acid, is available under the name NCPE 0424.

As in Dutch patent applications 8902321 and 9001826, the polymers of unsaturated hydrocarbons to be used are in the first place polyolefins, such as the different kinds of polyethylene and polypropylene, and furthermore polystyrene, as well as copolymers of these unsaturated hydrocarbons; in particular ethylene polymers are used.

As in Dutch patent applications 8902321 and 9001826, the degree of substitution of the etherified starch should be at least 0.25 and is preferably 0.4-1.0. The preferred starch ethers are hydroxypropyl ethers, obtained by condensation of starch with propylene oxide; this condensation is preferably carried out using alkaline catalysis, in particular with NaOH, whereby a statistic distribution of the products occurs.

Examples of the polyhydric alcohol used in this invention, are ethylene glycol, propylene glycol, glycerine, butylene glycol, diethylene glycol, pentaerythritol, dipentaerythritol, sorbitol en combinations thereof. These alcohols are used in amounts which cause to swell or partially dissolve the starch ether and they should not be used in such a large amount that a complete dissolution is achieved. For example the preferred hydroxypropyl starch dissolves in ethylene glycol in an amount of 30% at 75°C and in propylene glycol in an amount of 40%; in glycerol this compound dissolves in an amount of 10% at 100°C.

Preferably 20-70% by weight of polymer of unsaturated hydrocarbon, 20-80% by weight of starch ether, 11-19% by weight of compatibilizing copolymer and 2-8% by weight of polyhydric alcohol is used in the composition of this invention.

Because processing the mixture always involves a heating step, the polyhydric alcohol can completely develop its swelling or partially dissolving action.

Although the invention is not dependant on or restricted by theoretical considerations, it is believed that the hydrogen bondings of the starch are disrupted by the etherification, whereafter the polyhydric alcohol causes a further disentanglement of the starch molecules, so that the starch particles are present independently of each other and can be substantially completely molecularly dispersed.

The composition of this invention is excellently suitable for the manufacture of films, but also of three-dimensional objects. Furthermore, starch ethers and the polyhydric alcohol used are cheap materials, cheaper than the hydrocarbon polymer. A perfect composition containing 50% of starch ether can be obtained easily and also higher percentages of starch ether are suitable. Of course the optimal percentage of starch ether will also depend on the use of the composition.

The following non-limiting example illustrates this invention.

### Example

The mixtures indicated below where extruded at 180°C. The hydroxypropyl starch (HPS) had a degree of substitution of 0.5. The polyethylene was linear low density polyethylene (LLDPE) which is sold by Neste under the name NCPE 8020.

Compositions 4 and 5, which contained a copolymer of ethylene and acrylic acid (EAA) as a compatibilizing agent, served as comperative compositions. The EAA copolymer is sold by Exxon under the name EXXON Escomer 526 and contains 18% of acrylic acid.

Each of the mixtures was extruded at 180°C. The extruded materials were made into films by extrusion-blowing at 180°C. The films were examined for tensile strength and elongation at break.

**TABLE I**

| | Composition-parts of weight | | | | |
|---|---|---|---|---|---|
| | 1 | 2 | 3 | 4 | 5 |
| LLDPE (NCPE 8020) | 30 | 37.5 | 50 | 30 | 50 |
| HPS | 50 | 42.5 | 30 | 50 | 30 |
| NCPE 0414 or NCPE 0424* | 15 | 15 | 15 | - | - |
| EAA | - | - | - | 15 | 15 |
| Glycol | 5 | 5 | 5 | 5 | 5 |

| | | | | | |
|---|---|---|---|---|---|
| ∗ In the evaluation of compositions 1, 2 and 3 each run carried out with 15 parts by weight of NCPE 0414 and with 15 parts by weight of NCPE 0424, respectively; with these compatibilizing agents the same results were obtained. For the results reference is made to table II. | | | | | |

**TABLE II**

| | Tensile strength MPa/mm² | Elongation at break % |
|---|---|---|
| Foil of composition 1 | 21.1 | 300 |
| Foil of composition 2 | 23.8 | 465 |
| Foil of composition 3 | 25.0 | 620 |
| Foil of composition 4 (Comparative) | 12.3 | 330 |
| Foil of composition 5 (Comparative) | 14.6 | 640 |
| LLDPE 100% | 29.5 | 760 |

As appears from the above results, compositions 1 and 3 gave better results in terms of the tensile strength than the directly comparable compositions 4 and 5, respectively, which did not contain the acrylate of this invention but another acrylate, while composition 2, in which the amounts of LLDPE and HPS where in between the amounts of these ingredients in compositions 1 and 3, gave an intermediate result.
Thus, it can be seen that the present compositions provide a better tensile strength than the compositions of European patent application 91201981.7, while the elongation at break is substantially of the same order of magnitude.

## Claims (Claims for the following Contracting State(s): AT, BE, CH, DE, DK, FR, GB, GR, IT, LI, LU, MC, NL, PT, SE)

1. A composition, containing a polymer of unsaturated hydrocarbon, a C₁₋₄ alkyl or hydroxyalkyl ether of starch, an acrylate polymer as a compatibilizing agent and a polyhydric aliphatic alcohol having 2-10 carbon atoms and 2-6 hydroxyl groups as a dispersant/plasticizer for the starch ether, **characterized** in that said compatibilizing agent is an ethylene-butylacrylate copolymer, containing 12-25% of butylacrylate and having grafted thereon 0.1-20% by weight of unsaturated acid based on the total sum of ethylene-butylacrylate copolymer and unsaturated acid.

2. A composition according to claim 1, **characterized** in that the unsaturated acid is fumaric acid.

3. A composition according to claim 1, **characterized** in that said unsaturated acid is maleic acid.

4. A composition according to claim 2 or claim 3, **characterized** in that the amount of fumaric acid or maleic acid is 0.3-1.5%, more preferably 0.6-1.2%, and the amount of butylacrylate in the copolymer is 12-25%, more preferably 14-21%.

5. A composition according to claims 1-4, **characterized** in that it contains an ethylene polymer as said hydrocarbon polymer.

6. A composition according to claims 1-5, **characterized** in that the polyhydric alcohol is ethylene glycol, glycerin, propylene glycol, pentaerythritol or sorbitol.

7. A composition according to claims 1-6, **characterized** in that the composition contains at least 20% by weight of polymer of unsaturated hydrocarbon, at least 20% by weight of starch ether, 11-19% by weight of compatibilizing agent and 2-8% by weight of polyhydric alcohol.

8. A process for preparing a composition according to one or more of the foregoing claims, **characterized** in that the starch ether and the polyhydric alcohol are extruded together and thereafter the so obtained homogeneous material is admixed with the other components and this mixture is extruded.

9. Articles, manufactured with the use of a composition according to claims 1-7 or with the use of the process according to claim 8, respectively.

## Claims (Claims for the following Contracting State(s): ES)

1. A process for preparing a composition, containing a polymer of unsaturated hydrocarbon, a C₁₋₄ alkyl or hydroxyalkyl ether of starch, an acrylate polymer as a compatibilizing agent and a polyhydric aliphatic alcohol having 2-10 carbon atoms and 2-6 hydroxyl groups as a dispersant/plasticizer for the starch ether, the process comprising preparing a mixture of the components, **characterized** in that said compatibilizing agent is an ethylene-butylacrylate copolymer, containing 12-25% of butylacrylate and having grafted thereon 0.1-20% by weight of unsaturated acid based on the total sum of ethylene-butylacrylate copolymer and unsaturated acid.

2. A process according to claim 1, **characterized** in that the unsaturated acid is fumaric acid.

3. A process according to claim 1, **characterized** in that said unsaturated acid is maleic acid.

4. A process according to claim 2 or claim 3, **characterized** in that the amount of fumaric acid or maleic acid is 0.3-1.5%, more preferably 0.6-1.2%, and the amount of butylacrylate in the copolymer is 12-25%, more preferably 14-21%.

5. A process according to claims 1-4, **characterized** by using an ethylene polymer as said hydrocarbon polymer.

6. A process according to claims 1-5, **characterized** by using as said polyhydric alcohol ethylene glycol, glycerin, propylene glycol, pentaerythritol or sorbitol.

7. A process according to claims 1-6, **characterized** by preparing a composition containing at least 20% by weight of polymer of unsaturated hydrocarbon, at least 20% by weight of starch ether, 11-19% by weight of compatibilizing agent and 2-8% by weight of polyhydric alcohol.

8. A process according to claims 1-7, **characterized** in that the starch ether and the polyhydric alcohol are extruded together and thereafter the so obtained homogeneous material is admixed with the other components and this mixture is extruded.

9. Articles, manufactured with the use of the process according to claims 1-8.

## Patentansprüche (Patentansprüche für folgende(n) Vertragsstaat(en): AT, BE, CH, DE, DK, FR, GB, GR, IT, LI, LU, MC, NL, PT, SE)

1. Zusammensetzung aus einem Polymer eines ungesättigten Kohlenwasserstoffs, einem C₁₋₄-Alkyl- oder Hydroxyalkyl-Stärkeäther, einem Akrylatpolymer als Kompatibilisierungsmittel und einem mehrwertigen aliphatischen Alkohol mit zwei bis zehn Kohlenstoffatomen und zwei bis sechs Hydroxylgruppen als Dispersionsmittel und Weichmacher für der Stärkeäther, dadurch gekennzeichnet, daß das Kompatibilisierungsmittel ein Äthylen-Butylacrylat-Kopolymer mit 12 bis 25% Butylacrylat ist, auf das 0,1 bis 20 Gew% einer ungesättigten Säure bezogen auf die Gesamtsumme des Äthylen-Butylacrylat-Kopolymers und der ungesättigten Säure aufgepfropft werden.

2. Zusammensetzung nach Anspruch 1, dadurch gekennzeichnet, daß die ungesättigte Säure Fumarsäure ist.

3. Zusammensetzung nach Anspruch 1, dadurch gekennzeichnet, daß die ungesättigte Säure Maleinsäure ist.

4. Zusammensetzung nach Anspruch 2 oder 3, dadurch gekennzeichnet, daß der Anteil an Fumarsäure oder Maleinsäure 0,3 bis 1,5%, vorzugsweise 0,6 bis 1,2%, ist und daß der Anteil an Butylacrylat im Kopolymer 12 bis 25% ist, vorzugsweise 14 bis 21%.

5. Zusammensetzung nach den Ansprüchen 1 bis 4, dadurch gekennzeichnet, daß sie ein Äthylenpolymer als Kohlenwasserstoffpolymer enthält.

6. Zusammensetzung nach den Ansprüchen 1 bis 5, dadurch gekennzeichnet, daß der mehrwertige Alkohol Äthylenglykol, Glyzerin, Propylenglykol, Pentaerithrit oder Sorbit ist.

7. Zusammensetzung nach den Ansprüchen 1 bis 6, dadurch gekennzeichnet, daß sie mindestens 20 Gew% des ungesättigten Kohlenwasserstoffpolymers, mindestens 20 Gew% Stärkeäther, 11 bis 19 Gew% des Kompatibilisierungsmittels und 2 bis 8 Gew% mehrwertigen Alkohol aufweist.

8. Verfahren zur Vorbereitung einer Zusammensetzung nach einem der vorstehenden Ansprüche, dadurch gekennzeichnet, daß der Stärkeäther und der mehrwertige Alkohol gemeinsam extrudiert werden und daß dann das so erhaltene homogene Material mit den anderen Bestandteilen vermischt und dieses Gemisch extrudiert wird.

9. Gegenstände, die unter Verwendung der Zusammensetzung gemäß den Ansprüchen 1 bis 7 oder des Verfahrens gemäß Anspruch 8 hergestellt sind.

## Patentansprüche (Patentansprüche für folgende(n) Vertragsstaat(en): ES)

1. Verfahren zur Vorbereitung einer Zusammensetzung aus einem Polymer eines ungesättigten Kohlenwasserstoffs, einem C₁₋₄-Alkyl- oder Hydroxyalkyl-Stärkeäther, einem Akrylatpolymer als Kompatibilisierungsmittel und einem mehrwertigen aliphatischen Alkohol mit zwei bis zehn Kohlenstoffatomen und zwei bis sechs Hydroxylgruppen als Dispersionsmittel und Weichmacher für den Stärkeäther, wobei dieses Verfahren die Vorbereitung eines Gemisches der Bestandteile beinhaltet, dadurch gekennzeichnet, daß das Kompatibilisierungsmittel ein Äthylen-Butylacrylat-Kopolymer mit 12 bis 25% Butylacrylat ist, auf das 0,1 bis 20 Gew% einer ungesättigten Säure bezogen auf die Gesamtsumme des Äthylen-Butylacrylat-Kopolymers und der ungesättigten Säure aufgepfropft werden.

2. Verfahren nach Anspruch 1, dadurch gekennzeichnet, daß die ungesättigte Säure Fumarsäure ist.

3. Verfahren nach Anspruch 1, dadurch gekennzeichnet, daß die ungesättigte Säure Maleinsäure ist.

4. Verfahren nach Anspruch 2 oder 3, dadurch gekennzeichnet, daß der Anteil an Fumarsäure oder Maleinsäure 0,3 bis 1,5%, vorzugsweise 0,6 bis 1,2%, ist und daß der Anteil an Butylacrylat im Kopolymer 12 bis 25% ist, vorzugsweise 14 bis 21%.

5. Verfahren nach den Ansprüchen 1 bis 4, gekennzeichnet durch die Verwendung eines Äthylenpolymers als Kohlenwasserstoffpolymer.

6. Verfahren nach den Ansprüchen 1 bis 5, gekennzeichnet durch die Verwendung von Äthylenglykol, Glyzerin, Propylenglykol, Pentaerithrit oder Sorbit als mehrwertiger Alkohol.

7. Verfahren nach den Ansprüchen 1 bis 6, gekennzeichnet durch die Vorbereitung einer Zusammensetzung, die mindestens 20 Gew% des ungesättigten Kohlenwasserstoffpolymers, mindestens 20 Gew% Stärkeäther, 11 bis 19 Gew% des Kompatibilisierungsmittels und 2 bis 8 Gew% mehrwertigen Alkohol aufweist.

8. Verfahren nach den Ansprüchen 1 bis 7, dadurch gekennzeichnet, daß der Stärkeäther und der mehrwertige Alkohol gemeinsam extrudiert werden und daß dann das so erhaltene homogene Material mit den anderen Bestandteilen vermischt und dieses Gemisch extrudiert wird.

9. Gegenstände, die unter Einsatz des Verfahrens gemäß den Ansprüchen 1 bis 8 hergestellt sind.

## Revendications (Revendications pour l'(les) Etat(s) contractant(s) suivant(s): AT, BE, CH, DE, DK, FR, GB, GR, IT, LI, LU, MC, NL, PT, SE)

1. Composition contenant un polymère d'hydrocarbure insaturé, un éther d'amidon alcoylique ou hydroxyalcoylique C₁₋₄, un polymère d'acrylate servant d'agent de compatibilité et un alcool aliphatique polyhydrique ayant 2 à 10 atomes de carbone et 2 à 6 groupes hydroxyles servant de dispersant/plastifiant pour l'éther d'amidon,
caractérisée en ce que ledit agent de compatibilité est un copolymère d'éthylène/acrylate de butyle contenant entre 12 % et 25 % d'acrylate de butyle et ayant, greffé sur le copolymère, entre 0,1 % et 20 % en poids d'acide insaturé en se basant sur la somme totale du copolymère d'éthylène/acrylate de butyle et d'acide insaturé.

2. Composition selon la revendication 1, caractérisée en ce que l'acide insaturé est de l'acide fumarique.

3. Composition selon la revendication 1, caractérisée en ce que l'acide insaturé est de l'acide maléique.

4. Composition selon la revendication 2 ou 3, caractérisée en ce que la quantité d'acide fumarique ou d'acide maléique est comprise entre 0,3 % et 1,5 %, de façon plus préférable entre 0,6 % et 1,2 %, la quantité d'acrylate de butyle dans le copolymère étant comprise entre 12 % et 25 %, de façon plus préférable entre 14 % et 21 %.

5. Composition selon l'une quelconque des revendications 1 à 4, caractérisée en ce qu'elle contient un polymère d'éthylène servant de polymère d'hydrocarbure.

6. Composition selon l'une quelconque des revendications 1 à 5, caractérisée en ce que l'alcool polyhydrique est de l'éthylène glycol, de la glycérine, du propylène glycol, du pentaérythritol ou du sorbitol.

7. Composition selon l'une quelconque des revendications 1 à 6, caractérisée en ce que la composition contient au moins 20 % en poids de polymère d'hydrocarbure insaturé, au moins 20 % en poids d'éther d'amidon, entre 11 % et 19 % en poids d'agent de compatibilité et entre 2 % et 8 % en poids d'alcool polyhydrique.

8. Procédé de préparation d'une composition selon l'une quelconque ou plusieurs des revendications précédentes, caractérisé en ce que l'éther d'amidon et l'alcool polyhydrique sont extrudés ensemble et que, ensuite, le matériau homogène ainsi obtenu est mélangé avec les autres composants, ce mélange étant ensuite extrudé.

9. Articles fabriqués en utilisant, respectivement, la composition selon l'une quelconque des revendications 1 à 7 ou en utilisant le procédé selon la revendication 8.

## Revendications (Revendications pour l'(les) Etat(s) contractant(s) suivant(s): ES)

1. Procédé de préparation d'une composition contenant un polymère d'hydrocarbure insaturé, un éther d'amidon alcoylique ou hydroxyalcoylique C₁₋₄, un polymère d'acrylate servant d'agent de compatibilité et un alcool aliphatique polyhydrique ayant 2 à 10 atomes de carbone et 2 à 6 groupes hydroxyles servant de dispersant/plastifiant pour l'éther d'amidon, le procédé comprenant l'étape de préparation d'un mélange de composants.
caractérisé en ce que ledit agent de compatibilité est un copolymère d'éthylène/acrylate de butyle contenant entre 12 % et 25 % d'acrylate de butyle et ayant, greffé sur le copolymère, entre 0,1 % et 20 % en poids d'acide insaturé en se basant sur la somme totale du copolymère d'éthylène/acrylate de butyle et d'acide insaturé.

2. Procédé selon la revendication 1, caractérisé en ce que l'acide insaturé est de l'acide fumarique.

3. Procédé selon la revendication 1, caractérisé en ce que l'acide insaturé est de l'acide maléique.

4. Procédé selon la revendication 2 ou 3, caractérisé en ce que la quantité d'acide fumarique ou d'acide maléique est comprise entre 0,3 % et 1,5 %, de façon plus préférable entre 0,6 % et 1,2 %, la quantité d'acrylate de butyle dans le copolymère étant comprise entre 12 % et 25 %, de façon plus préférable entre 14 % et 21 %.

5. Procédé selon l'une quelconque des revendications 1 à 4, caractérisé par l'utilisation d'un polymère d'éthylène comme polymère d'hydrocarbure.

6. Procédé selon l'une quelconque des revendications 1 à 5, caractérisé par l'utilisation comme alcool polyhydrique de l'éthylène glycol, de la glycérine, du propylène glycol, du pentaérythritol ou du sorbitol.

7. Procédé selon l'une quelconque des revendications 1 à 6, caractérisé par la préparation d'une composition contenant au moins 20 % en poids de polymère d'hydrocarbure insaturé, au moins 20 % en poids d'éther d'amidon, entre 11 % et 19 % en poids d'agent de compatibilité et entre 2 % et 8 % en poids d'alcool polyhydrique.

8. Procédé selon l'une quelconque des revendications 1 à 7, caractérisé en ce que l'éther d'amidon et l'alcool polyhydrique sont extrudés ensemble et que, ensuite, le matériau homogène ainsi obtenu est mélangé avec les autres composants, ce mélange étant ensuite extrudé.

9. Articles fabriqués en utilisant le procédé selon l'une quelconque des revendications 1 à 8.
